# EUROPEAN PATENT SPECIFICATION

(11) **EP 3 918 198 B1**
(45) Date of publication and mention of the grant of the patent: **26.10.2022**
(21) Application number: 19703941.5
(22) Date of filing: 31.01.2019
(51) Int. Cl.: F03D 80/50

(54) **A MAINTENANCE ENCLOSURE AND METHOD FOR MAINTAINING WIND TURBINE BLADES**
WARTUNGSGEHÄUSE UND VERFAHREN ZUM WARTEN VON WINDTURBINENSCHAUFELN
ENCEINTE ET PROCÉDÉ DE MAINTENANCE DE PALES D'ÉOLIENNE

(43) Date of publication of application: 08.12.2021
(73) Proprietor: Hangout A/S, 8700 Horsens (DK)
(72) Inventor: LAURSEN, Jens Nygaard, 6980 Tim (DK)
(74) Representative: Patentgruppen A/S
(86) International application number: PCT/DK2019/050040
(87) International publication number: WO 2020/156622

(56) References cited:
- EP-A1- 2 114 619
- EP-A1- 2 957 538
- EP-A2- 2 484 894
- EP-B1- 2 114 619
- WO-A1-2015/188830
- WO-A1-2017/174087

## Description

### Field of the invention

The invention relates to a maintenance enclosure for use when maintaining a wind turbine blade, wherein the maintenance enclosure comprises a ceiling, a floor and at least two side walls extending between the ceiling and the floor. The invention also relates to a method for maintaining a wind turbine blade.

### Background of the invention

Wind turbines have become an increasing source of energy around the world. These devices produce energy by having a set of blades rotate in the wind and thereby drive a generator which produces energy. It is known that especially the blades are subject to heavy wear due to the direct exposure to the environment and the high tangential velocity, especially at the tip of the blade. As the wind turbine blade rotates the leading edge of the blade may collide with e.g. rain drops. The angular speed and length of the wind turbine blade results in a high-energy impact between rain drops and the leading edge of the wind turbine blade whereby the rain drops may, over time, damage the blade of the wind turbine. Damage on the wind turbine blade may also origin from e.g. lightning strikes or fatigue loads which may result in crack propagation in the blade. This is not particularly beneficial as the aerodynamic behavior and the structural integrity of the blade is thereby negatively affected. Ultimately, the performance of the wind turbine is heavily reduced, or the wind turbine blade may even break down if no actions are taken. Thus, from DE 10 2016 121 273 A1 it is known to perform service on wind turbine blades by lifting a maintenance chamber up to a vertically positioned wind turbine blade and therefrom perform the necessary service and maintenance work. Likewise, European application EP 2957538 A1 discloses service on a vertically positioned blade and European application EP 2114619 A1 and international application WO 2015/188830 A1 disclose service of a dismantled blade on the ground. However, performing maintenance according to the prior art is difficult and complex in that only a limited part of the wind turbine blade may be accessed from the maintenance chamber and service on the ground is complex and expensive. Thus, the solutions according to the prior art are not efficient for maintaining wind turbine blades.

It is therefore an object of the present invention to provide for an apparatus and method for maintaining wind turbine blades which solves the above-mentioned problems.

### The invention

The invention provides for a maintenance enclosure for use when maintaining a wind turbine blade. The maintenance enclosure comprises a ceiling, a floor and at least two side walls which extend between the ceiling and the floor. The maintenance enclosure also comprises a first adjustable opening in a first side wall of the at least two side walls which are adapted for receiving the wind turbine blade and a second adjustable opening in a second side wall of the at least two side walls which are adapted for receiving the wind turbine blade. The first adjustable opening and the second adjustable opening are positioned opposite each other and the floor comprises a slit which extends at least a portion of the distance between the first adjustable opening and the second adjustable opening. Furthermore, the slit is adapted for receiving the wind turbine blade.

It is advantageous to provide for a maintenance enclosure which comprises a slit and adjustable openings in a first side wall and a second sidewall of the maintenance enclosure in that the maintenance enclosure may be placed on a wind turbine blade in a horizontal position. This is advantageous in that the maintenance work is easier to perform and a larger section of the wind turbine blade may be enclosed by the maintenance enclosure.

In this context, the term "maintenance enclosure" should be understood as any construction which is fully or partly enclosed. Thus, the maintenance enclosure could comprise a container, a steel frame, a booth or any other type of fully or partly closed construction which may be used for receiving and maintaining a wind turbine blade in a horizontal position.

Furthermore, in this context, the term "adjustable opening" and should be understood as an opening which adapts to the operational requirements, i.e. it may be closed, open, partly closed and/or adaptable to a shape of a wind turbine blade. Thus, it may be a hatch, door, hole or other kind of opening which may be re-shaped, closed, partly closed or opened.

In this context, the term "slit" should be understood as a channel or cut-away which extends completely through the floor in the vertical direction such that it forms an open channel extending at least a part of the distance between the first and second adjustable opening and whereby at least a part of the wind turbine blade may be received in the slit.

In an aspect of the invention the maintenance enclosure comprises a blade edge support adapted for supporting the maintenance enclosure on an edge of the wind turbine blade.

It is advantageous to provide the maintenance enclosure with a blade edge support in that the maintenance enclosure may be supported on the edge of the wind turbine airfoil such that the mutual engagement stabilizes the position of the enclosure and the airfoil or at least such that the maintenance enclosure follows the position of the wind turbine blade.

In this context, the term "blade edge" should be understood as the leading edge or the trailing edge of the wind turbine blade.

In this context, the term "blade edge support" should be understood as a rack, frame, chain, suspension or any other kind of structure which may support the maintenance enclosure on the leading edge of the wind turbine blade such that at least a part of the weight load from the maintenance enclosure is transferred through the wind turbine blade and/or such that the blade edge support may aid in maintaining the mutual position of the maintenance enclosure and the blade vertically but e.g. also horizontally.

In an aspect of the invention the maintenance enclosure is formed elongated and wherein the first side wall and the second side wall are positioned in opposite ends of the elongated maintenance enclosure.

It is advantageous to form the maintenance enclosure elongated and arranging the first and second side wall in opposite ends of the maintenance compartment in that it hereby is possible to form the maintenance enclosure relatively compact and still be able to access a relatively large portion of the blade from inside the maintenance enclosure. Thus, the maintenance enclosure can be formed with a simple geometry which is easy to lift onto the wind turbine blade.

In an aspect of the invention, the maintenance enclosure is formed as a parallelepiped, wherein each angle is a 90-degree angle.

Forming the enclosure is a parallelepiped with 90-degree angles is advantageous in that a rigid and safe enclosure is provided. Furthermore, this shape enables easy storing, stacking and handling.

It should be emphasized, that a parallelepiped with 90-degree angle is to be understood as a three-dimensional figure wherein the base shape as seen from the side (transverse to its longitudinal direction) has a rectangular shape.

In an aspect of the invention, the maintenance enclosure is an ISO-container comprising a corner casting in each corner of said ISO-container.

It is advantageous if the maintenance enclosure is an ISO-container comprising a corner casting in each corner in that the maintenance enclosure thereby comprises standardized dimensions such that standard container lifting and transportation machinery may be used for lifting and transporting the maintenance enclosure.

A corner casting is well known to the skilled person as the corner block provided at each corner of the ISO-container for lifting the container. Each of these corner castings are provided with a number of openings for twistlock fasteners to allow gripping the container from above, below, or the side, and enable mutual fixation between stacked containers to secure them during stacking.

In an aspect of the invention, the slit extends along the longitudinal direction of the maintenance enclosure.

Usually the length of the maintenance enclosure is larger than the width. Therefore, it is advantageous if the slit extends along the longitudinal direction of the maintenance enclosure in that the size of the enclosure is utilised more efficiently.

In an aspect of the invention, the slit extends the entire length of the floor.

It is advantageous if the slit extends the entire length of the floor in that the service enclosure may be lifted onto any part of the blade.

In an aspect of the invention, the first adjustable opening and/or the second adjustable opening comprises a sliding door.

It is advantageous to provide one or both of the adjustable openings with a sliding door in that it may easily be closed/open depending on requirements. Furthermore, sliding door do not swing open due to e.g. wind load and they do not require extra space when opened.

In an aspect of the invention, the maintenance enclosure comprises blade positioning means adapted for maintaining the mutual position between the maintenance enclosure and the wind turbine blade in the horizontal direction.

To efficiently harvest energy from wind, wind turbines are designed as tall constructions such that the blades may rotate at a high altitude where a strong wind exists. However, same wind may also introduce large blade tip deflections which may constitute a problem when lifting the maintenance cabin onto the blade. Therefore, it is advantageous to provide the maintenance cabin with blade positioning means for maintaining the mutual position between the maintenance cabin and the blade in the horizontal direction in that the maintenance cabin and the blade are mutually engaged whereby the working environment is stabilised.

In an aspect of the invention, the blade positioning means are adjustable in the horizontal direction.

It is advantageous if the blade positioning means are adjustable in the horizontal direction in that the blade positioning means hereby can be adapted to the actual width of the blade. Furthermore, the blade positioning means may be used for gripping onto the wind turbine blade and thereby stabilise the horizontal position of the maintenance enclosure and the blade.

In an aspect of the invention, the blade positioning means comprises suction cups and/or expanding walls.

To ensure that any part of the blade may fit into the slit the slit is designed wider than the blade by a margin such that there is some tolerance on either side of the blade. However, this also enables the blade to deflect back and forth and it is therefore advantageous if the blade positioning means comprises expanding walls for obtaining a tight sealing along the enclosure 1 and the blade 2. It is also advantageous if the blade positioning means comprises suction cups in that the suction cups may engage the surface of the blade 2 such that the mutual position between the blade 2 and enclosure 1 is stabilized.

In this context, the term "expanding walls" should be understood as a movable wall, expanding air cushion, barrier or any other kind of wall which may expand.

In an aspect of the invention, the maintenance enclosure comprises lifting lugs on the outer side.

It is advantageous to provide the maintenance enclosure with lifting lugs in that the maintenance enclosure may be lifted up by lifting from the dedicated lifting lugs whereby the stresses in the construction arising when lifting the enclosure are well distributed.

In an aspect of the invention, the first adjustable opening and/or the second adjustable opening comprises a sealing element adaptable to the shape of at least a part of the circumference of the wind turbine blade.

It is advantageous if the first adjustable opening and/or the second adjustable opening comprises a sealing element which is adaptable to the shape of at least a part of the wind turbine blade in that a tight sealing may be achieved on different sections of the blade which may comprise a different shape. Furthermore, this is advantageous in that e.g. rain, snow or dust is kept outside whereby a comfortable working environment may be obtained.

It should be emphasized that the sealing element could provide for sealing against rain, snow, wind, thermal insulation or other type of sealing.

In an aspect of the invention, the sealing element comprises air cushions.

It is advantageous if the sealing element comprises air cushions in that the sealing element may easily adapt to the blade contour and thereby provide for a sufficient sealing and a gentle contact between sealing and wind turbine blade.

In an aspect of the invention, the length of the maintenance enclosure is between 4 and 30 meters, preferably between 6 and 22 meters and most preferably between 8 and 16 meters. The width of the maintenance enclosure is between 1 and 10 meters, preferably between 2 and 8 meters and most preferably between 3 and 6 meters. The the height of the maintenance enclosure is between 0.5 and 8 meters, preferably between 1 and 6 meters and most preferably between 2 and 5 meters.

If the length, width and height of the maintenance enclosure is too large, the maintenance enclosure may become too heavy and unpractical to move around. Furthermore, if for example the length is much larger than the width or the height, the stiffness of the construction may be insufficient, and the enclosure may buckle under its own weight or when carrying loads. And if the dimensions are too small, it may be troublesome to fit working tools and maintenance personnel inside the enclosure. Thus, the present dimensions present an advantageous relationship between structural integrity and function.

In an aspect of the invention, the maintenance enclosure comprises positioning means for bringing the maintenance enclosure into alignment with the wind turbine blade.

It is advantageous to provide the maintenance enclosure with positioning means in that the orientation and position of the maintenance enclosure may be adjusted while mid-air for easier alignment with the wind turbine blade.

In this context, the term "positioning means" should be understood as propellers, nozzles, wires or other kind of position actuators suitable for adjusting the position of the maintenance enclosure when mid-air.

In an aspect of the invention, the positioning means comprises propellers.

It is advantageous if the positioning means comprises propellers in that the orientation of the maintenance enclosure may be adjusted with a relatively simple mechanical solution and that the adjustment of the position and/or the orientation of such a maintenance cabin may be performed without the aid from a crane, wind turbine tower, ground tools or other.

In an aspect of the invention, the maintenance enclosure comprises guide means at the floor which are arranged to guide the wind turbine blade into the slit.

It is advantageous if the service enclosure comprises guide means at the floor in that the blade is easier guided into the slit of the service enclosure.

In this context, the term "guide means" should be understood as a guide wheel, a narrowing-down channel, air cushion or other type of guider for easier guiding the blade into the slit.

In an aspect of the invention, the maintenance enclosure comprises lifting means inside the maintenance enclosure.

It is advantageous to provide the maintenance enclosure with lifting means inside the enclosure in that heavy tools (which may be necessary in connection with the maintenance of the blade) may easier be lifted and moved inside the enclosure.

In this context, the term "lifting means" should be understood as a traverse crane, hydraulic jack, pulley system or other kinds of lifters for lifting heavy tools or other objects inside of the maintenance enclosure

Furthermore, the invention provides for a method for maintaining a wind turbine blade. The method comprising the steps of:
- positioning a wind turbine blade of a wind turbine in a substantially horizontal position,
- lifting a maintenance enclosure onto the wind turbine blade so that the wind turbine blade penetrates the floor and at least one side wall of the maintenance enclosure,
- performing maintenance on the wind turbine blade from inside of the maintenance enclosure.

It is advantageous to provide for a method for maintaining a wind turbine blade according to the above-mentioned method in that it is possible to cover a larger section of the blade at a time whereby the maintenance enclosure is more efficient. Furthermore, the service personnel may perform the maintenance work in a more comfortable working position in that the workers do not have to repeatedly bend and stretch as would have been necessary in order to work along a blade in a vertical position. Also, space problems in relation to the wind turbine tower are solved in that the maintenance enclosure is operated in an area away from the tower.

In an aspect of the invention, the method comprises the step of fixating the position of the maintenance enclosure in relation to the wind turbine blade before performing the maintenance.

When the blade is received in the maintenance enclosure it may fluctuate from side to side and lead to a potentially lethal situation for the maintenance personnel inside of the enclosure. Therefore, it is advantageous to fixate the position of the enclosure in relation to the blade before performing the maintenance in that a safer working environment is achieved. Furthermore, the maintenance work itself is easier to carry out if the wind turbine blade is not fluctuating inside the enclosure.

In an aspect of the invention, the wind turbine blade is positioned with a leading edge of the wind turbine blade facing upwards.

The leading edge of the blade is exposed to heavy wear and a large part of the maintenance work is performed hereon. Therefore, it is advantageous to arrange the blade such that the leading edge is facing upwards in that the leading edge is easier accessed. Furthermore, the blade is designed to carry a much greater load in the direction from the leading edge to the trailing edge than in the opposite direction in that the blade is loaded in this direction during normal use.

In an aspect of the invention, the maintenance enclosure is lifted onto the wind turbine blade by means of a crane.

It is advantageous to use a crane for lifting the maintenance cabin onto the wind turbine airfoil in that it provides for a stable and balanced lifting.

It should be emphasized that in this context, the term "crane" should be understood as any type of tower crane, telescopic crane, floating crane or other type of crane suitable for the task of lifting heavy objects.

In an aspect of the invention, the method further comprises the step of guiding the maintenance enclosure onto the wind turbine blade by means of positioning means capable of adjusting the position and/or orientation of the maintenance enclosure in the horizontal plane.

Joining two objects in a certain orientation mid-air may be difficult for example if the wind is blowing. Therefore, using positioning means capable of adjusting the position and/or the orientation of the enclosure is advantageous in that the step of guiding the maintenance enclosure onto the blade is eased.

In an aspect of the invention, the method further comprises the step of sealing a gap between the wind turbine blade and the floor and/or between the wind turbine blade and the at least one sidewall after lifting a maintenance enclosure onto the wind turbine blade.

It is advantageous to seal a gap between the wind turbine blade and the floor and/or between the blade and the at least one sidewall in that a more comfortable working environment is achieved in that the enclosure is isolated from rain, snow, wind.

In an aspect of the invention, the method of maintaining the wind turbine blade is performed by means of a maintenance enclosure according to any of the previously described maintenance enclosures.

Using the previously described maintenance enclosures for carrying out the method of maintaining the wind turbine blade is advantageous in that it provides for an efficient maintenance and comfortable working environment.

The invention also provides for use of a maintenance enclosure according to any of the previously described maintenance enclosures for performing maintenance on a wind turbine blade of an offshore wind turbine.

Offshore wind turbines are located at sites with tough weather conditions. Therefore, using a maintenance according to any of the previously described maintenance enclosures for maintaining a wind turbine blade of an offshore wind turbine is advantageous in that it is be easily adapted to these conditions.

### Figures

The invention will be described in the following with reference to the figures in which
- fig. 1.: illustrates a maintenance enclosure enclosing a part of a wind turbine blade as seen in perspective,
- fig. 2: illustrates a maintenance enclosure enclosing a part of a wind turbine blade as seen from the side,
- fig. 3: illustrates a maintenance enclosure as seen in a first perspective view,
- fig. 4: illustrates a maintenance enclosure as seen in a second perspective view,
- fig. 5: illustrates a maintenance enclosure as seen from the front,
- fig. 6: illustrates a right section of a maintenance enclosure as seen in perspective,
- fig. 7: illustrates a left section of a maintenance enclosure as seen in perspective,
- fig. 8: illustrates a different configuration of a maintenance enclosure enclosing a part of a wind turbine blade as seen in perspective,
- fig. 9: illustrates a different configuration of a maintenance enclosure enclosing a part of a wind turbine blade as seen from the side,
- fig. 10: illustrates a different configuration of a maintenance enclosure enclosing a part of a wind turbine blade as seen from the top,
- fig. 11: illustrates an embodiment of the maintenance enclosure formed as a container and positioned at the tip of the blade as seen in perspective,
- fig. 12: illustrates an embodiment of the maintenance enclosure formed as a container and positioned at a substantially middle part of the blade as seen in perspective,
- fig. 13: illustrates a cross-sectional view of the wind turbine blade, and
- fig. 14: illustrates a wind turbine.

### Detailed description

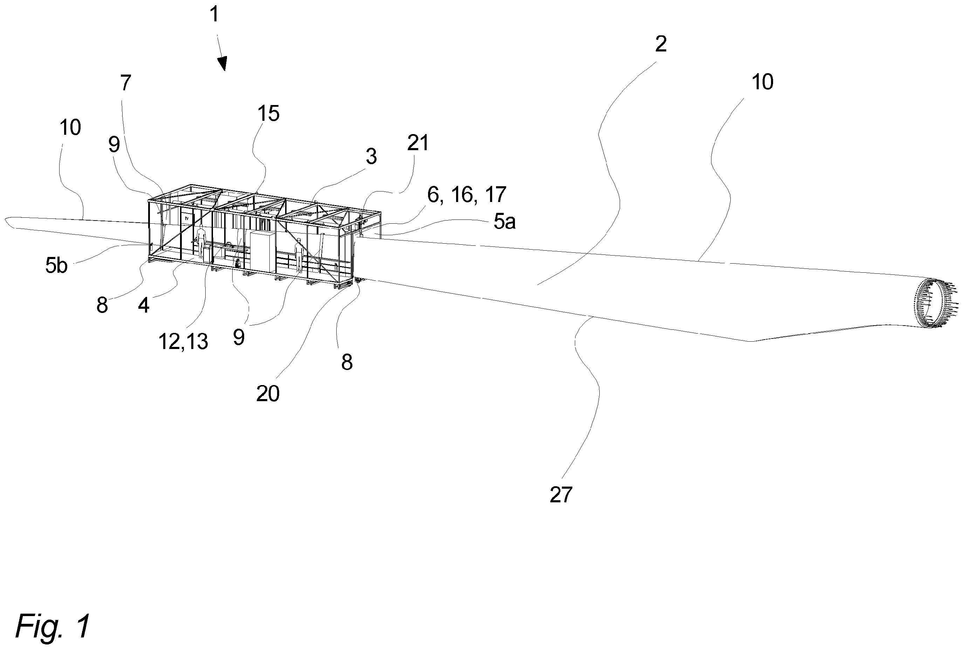

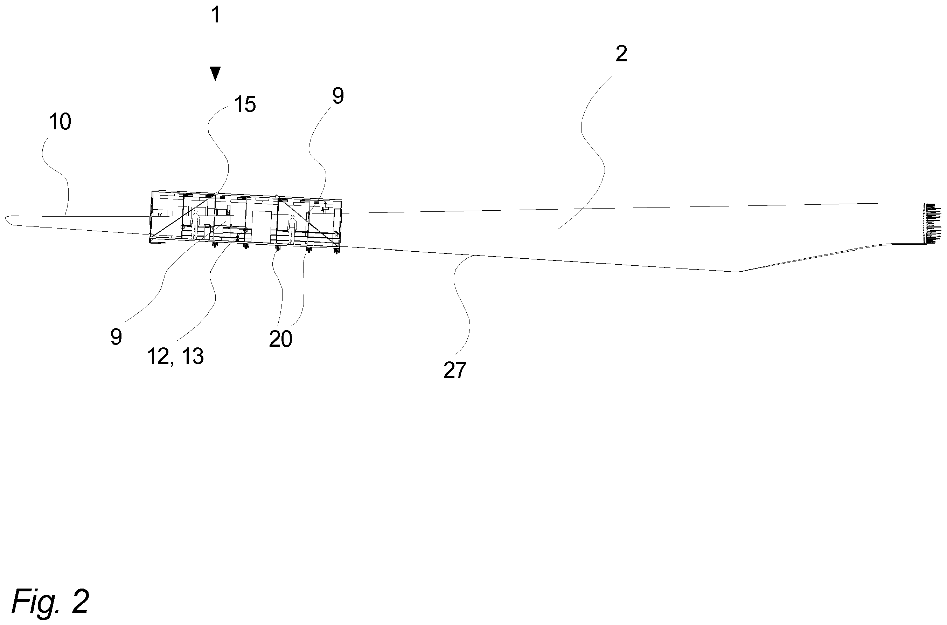

Figs. 1-2 illustrate a maintenance enclosure 1 enclosing a part of a wind turbine blade 2 as seen in perspective and from the side, respectively.

It should be noted that the wind turbine blade 2 is mounted on a wind turbine throughout all the figures although this is not shown in the figures for the sake of simplicity. Furthermore, it should be noted that orientation terms such as, horizontal, vertical, up and down should be understood in relation to the maintenance enclosure in operational position, i.e. when the floor 4 of the maintenance enclosure 2 is substantially parallel with a wind turbine blade 2 in horizontal position or close to horizontal position when mounted on a wind turbine.

At some point in the lifetime of the wind turbine blade 2, maintenance must be performed due to e.g. cracks initiating from fatigue loads and the wear on the leading edge 10 of the wind turbine blade 2 due to collision with e.g. rain drops. The maintenance enclosure 1 as disclosed in figs. 1-2 is adjusted such that the it is slightly tilted in relation to horizontal such that the floor 4 is substantially parallel with the trailing edge 27 of the wind turbine blade. Thus, the vertical position of the maintenance enclosure may be adjusted by adjusting the blade edge support 9. This may be beneficial if e.g. vortex generators, flaps, low-pressure side, high-pressure side 25 or trailing edge maintenance is necessary in that the access to the entire wind turbine blade surface of a given section may be accessed.

The maintenance personnel may be present inside the maintenance enclosure 1 during the process of lifting the maintenance enclosure 1 up and onto the wind turbine blade 2. They may also be transported to and from the maintenance enclosure e.g. with a helicopter or other means for transporting people after the maintenance enclosure 1 has been positioned on the blade 2.

In this embodiment the maintenance enclosure 1 is lifted onto the wind turbine blade 2 by means of a telescopic crane (not shown). However, in another embodiment, the maintenance enclosure 1 could be lifted by using a helicopter, one or more drones, a forklift machine, a mobile crane, crawler crane or any other means for lifting the maintenance platform onto the wind turbine airfoil. The maintenance platform 1 may also be self-propelled e.g. by comprising nozzles or propellers at the bottom (or at the top) which lift the maintenance platform 2 upwards.

When the maintenance enclosure 1 must be repositioned in order to perform maintenance work or service on another section of the wind turbine blade 2, the repositioning is performed by e.g. a crane (not shown) which lifts the maintenance enclosure 1 free from the blade 2 where after it is moved along the blade. However, in an embodiment the maintenance enclosure 1 may comprise driving means (not shown) for moving the maintenance enclosure 1 along the blade 2 without the aid of a lifting crane such that it is self-propelled. The driving means could comprise wheels, a pulley system, caterpillar tracks or any other kind of driver suitable for moving the maintenance enclosure 1 along the blade 2.

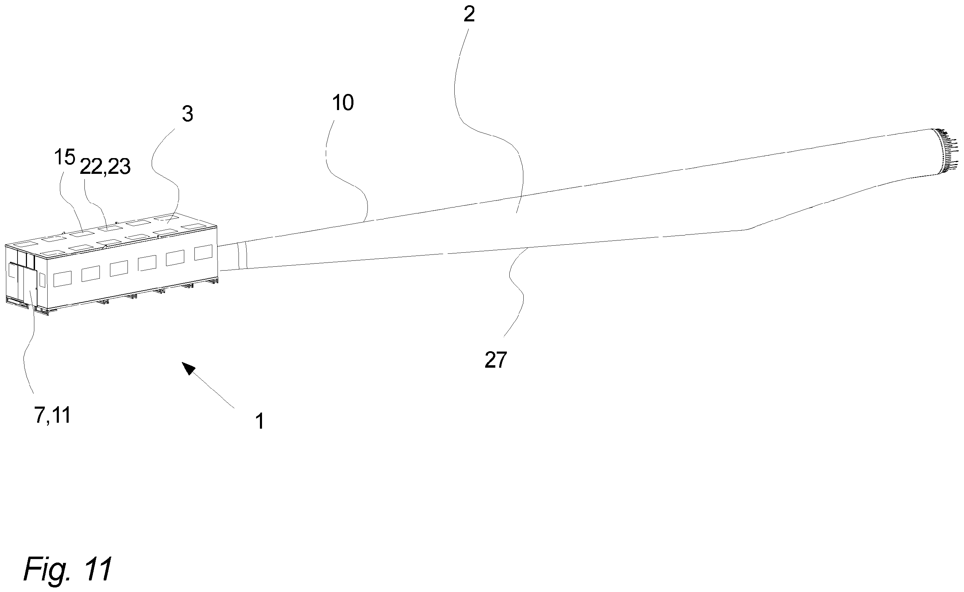

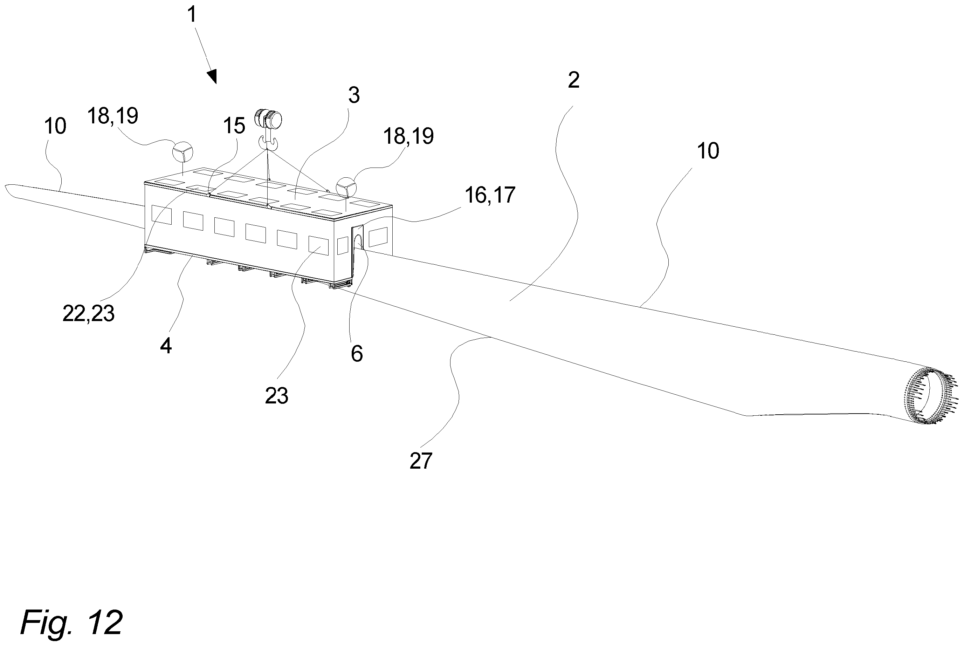

In this embodiment, the first side wall 5a and second side wall 5b comprises a series of struts. However, in another embodiment, the first side wall 5a and/or the second sidewall 5b could comprise a solid wall (see for example fig. 11 and fig. 12), glass panes, a grate, railing, metal shell or any other type of wall for enclosing the maintenance enclosure 1. Also, in this embodiment, the first side wall 5a and second side wall 5b are positioned on opposite ends of the elongated maintenance enclosure 1.

In an embodiment, the maintenance enclosure may be completely or partly enclosed by a tarp and it could be open to the sides and/or the top and/or it could be partly open to the sides and/or the ceiling.

As an exemplary embodiment the maintenance work could be performed according to the method comprising the steps of
- positioning a wind turbine blade 2 of a wind turbine 28 in a substantially horizontal position by rotating the relevant blade 2 to a substantially horizontal position by using e.g. gearing mechanism and motors already present in the wind turbine 28. In some embodiments of the method the blade could also be locked in the substantially horizontal position by locking the gearing of the wind turbine or using external equipment for locking rotation of the blade 2.
- lifting a maintenance enclosure onto the wind turbine blade 2 so that the wind turbine blade 2 penetrates the floor 4 and at least one side wall 5a or 5b of the maintenance enclosure 1. The enclosure 1 could be lifted onto the blade 2 by using a crane (not shown) or it could be lifted by using other kinds of tools or machinery.
- performing maintenance on the wind turbine blade 2 from inside of the maintenance enclosure.

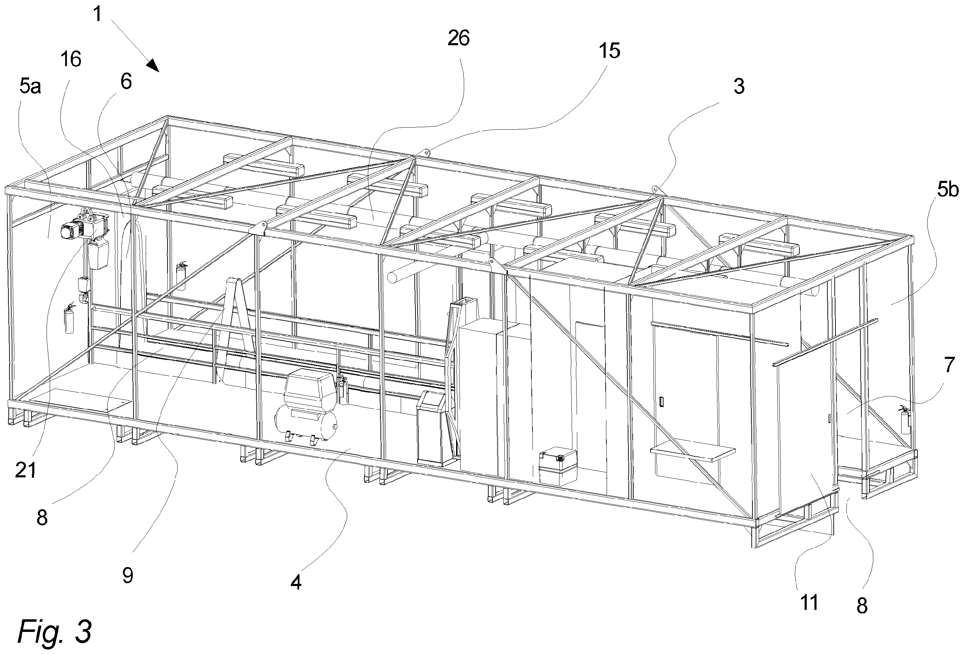

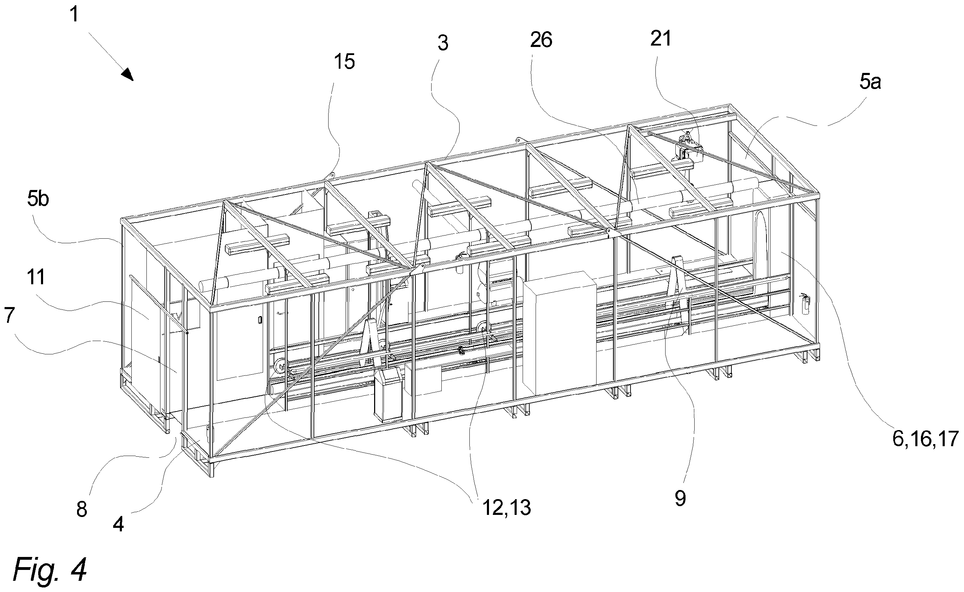

Fig. 3-4 illustrates a maintenance enclosure 1 as seen in perspective.

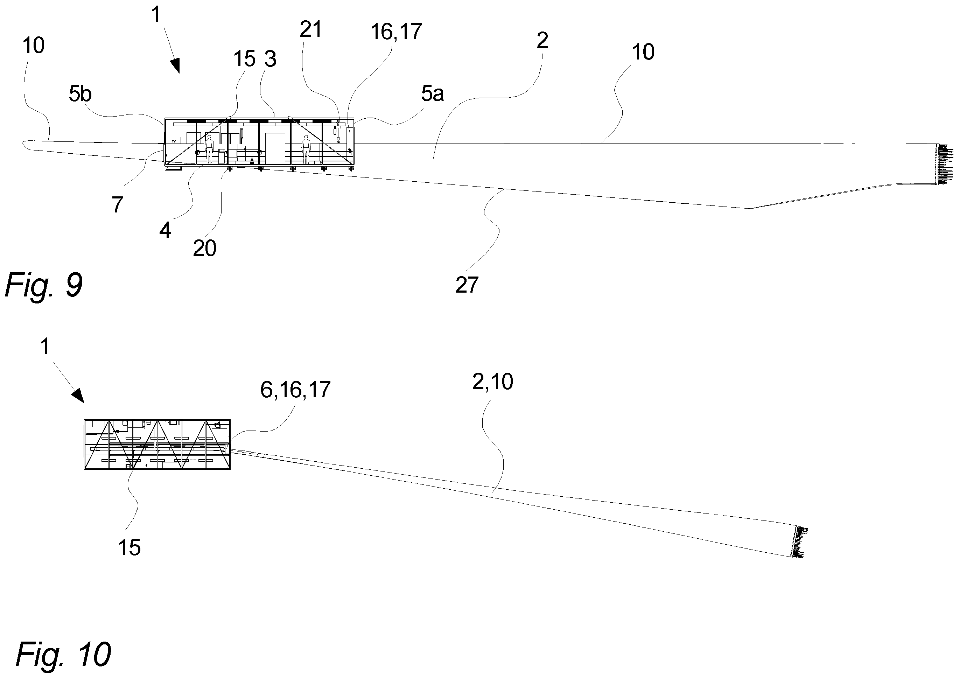

Some maintenance work may only require service or maintenance on the tip of the wind turbine blade 2. Therefore, the maintenance enclosure only encloses the tip of the wind turbine blade 2 (see for example fig. 10, fig. 11 and fig. 13). Accordingly, the wind turbine blade 2 does not necessarily protrude through the second adjustable opening 7. Therefore, the second adjustable opening 7 is in this embodiment a sliding door 11 which may easily be opened and closed depending on operational requirements. However, in another embodiment, the first adjustable opening and/or the second adjustable opening 7 could comprise an air cushion, a swinging door or a hatch.

In this embodiment, the blade edge support 9 is a rack shaped in the form of a "V". However, in another embodiment the blade edge support 9 could comprise a frame, rods, beams, spring suspension or other kind of structure for supporting a part of the load from the main enclosure 2 on the leading edge 10 of the blade 2.

Also, some maintenance work may require drilling, welding, gluing, soldering or other kind of process which may develop toxic smoke or fumes which may be harmful to the maintenance personnel if exposed to for large periods of time. Therefore, the maintenance enclosure 1 may comprise a ventilation system 26. The maintenance enclosure 1 may further comprise a climate control system or a dehumidifier for adjusting the environment inside the maintenance enclosure 1. Said systems could be separate systems or combined into one system.

The maintenance enclosure 1 may be provided with different kinds of monitoring systems. For example, the maintenance enclosure 1 may be provided with anemometers for monitoring wind speeds and thereby provide the maintenance personnel with warning signs if the wind speed exceeds a critical speed at which it may not be safe to stay in the maintenance enclosure 1. Also, in such situations, a quick evacuation route may be urgent. Thus, in an embodiment, the maintenance enclosure 1 may comprise means for evacuating the personnel such as inflatable evacuation slide, evacuation capsule, inflatable evacuation channel or other kind of evacuation systems. Other emergency equipment which may be comprised in the maintenance enclosure could be fire extinguishers, first aid kit and other.

Generally, the maintenance enclosure 1 may comprise different kind of tools necessary for performing the maintenance work such as compressors, drills, screw drivers, high pressure cleaners, tools boxes etc.

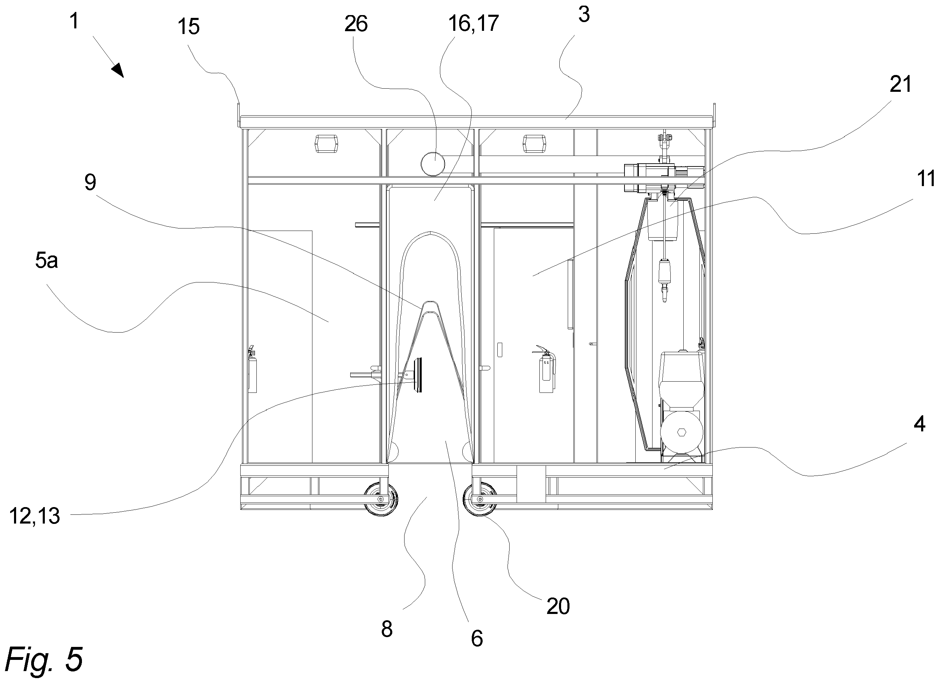

Fig. 5 illustrates a maintenance enclosure 1 as seen from the side.

Maintenance work on a wind turbine blade 2 may require heavy duty tools, power tools, heavy replacement parts or other objects, which may be troublesome to move around. Thus, the maintenance enclosure 1 may comprise lifting means 21 for lifting these objects. In this embodiment, the lifting means 21 is a traverse crane. However, in another embodiment, the lifting means 21 could be a pulley system, a robot arm, boom arm or other kind of lifting structure which may be attached to the ceiling 3.

In this embodiment, the slit 8, as shown in fig. 5, has a rectangular geometry. However, in another embodiment, the base shape of the slit 8 could be triangular, circular, polygonal or any other shape which may form a slit and may be suitable for receiving a wind turbine blade 2. Also, the slit 8 may be at least partly covered by a roll out tarpaulin, a hatch or similar covering means as precautionary measure if for example the maintenance enclosure is to be shipped to another site or when not in operation. The maintenance enclosure 1 may comprise guide means 20 for directing and guiding the blade 2 into the slit 8 such that blade 2 is partly or fully received in the slit 8. In this embodiment, the guide means 20 comprises wheels. In another embodiment the guide means 20 could also comprise a suspension mechanism for absorbing any minor collision between the guide means 20 and the wind turbine blade 2 which may occur when the enclosure 1 is lifted onto the wind turbine blade 2. In another embodiment, the guide means 20 could comprise a narrowing-down channel and the edge of the floor could also be tapered so that the blade is guided into the slit 8.

In an embodiment, the maintenance enclosure 1 may comprise a battery pack (not shown) for providing energy to computer systems, tools, ventilation system or other energy consuming apparatus in the maintenance enclosure 1.

To ensure light-weight construction, the maintenance enclosure 1 comprises steel or aluminum frame. However, in an embodiment the frame could comprise e.g. composite materials or polymer materials. The main frame of the maintenance enclosure 1 could also comprise 3D printed parts.

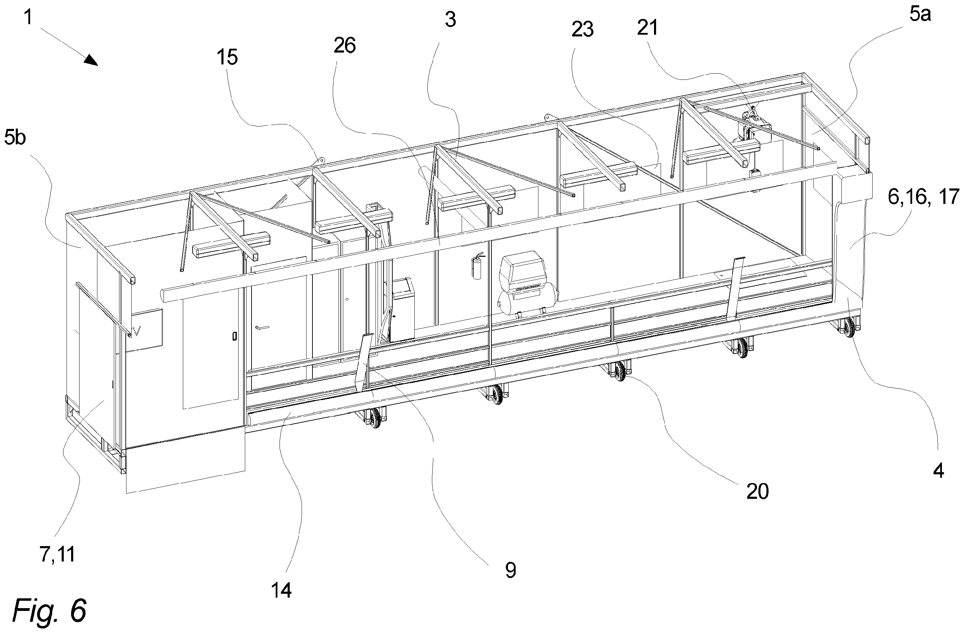

Fig. 6-7 illustrate two different section views of a maintenance enclosure 1.

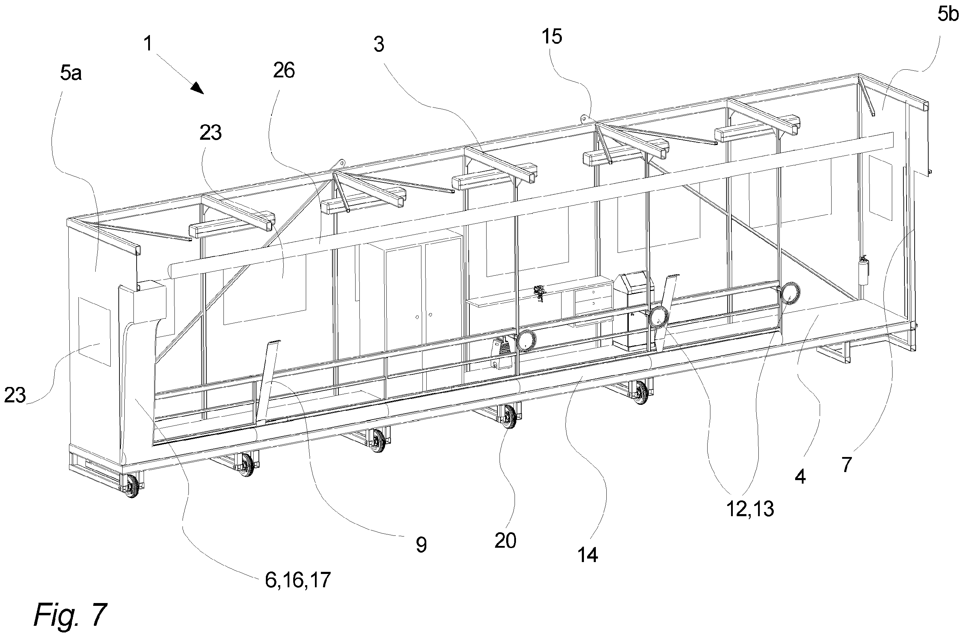

In the embodiment as disclosed in fig. 7, the blade positioning means 12 comprises suction cups 13. However, in another embodiment, the blade positioning means 12 could comprise an expanding wall 14 (e.g. an inflatable cushion), supporting struts, a movable wall, a wedge, a fender or any other kind of structure or mechanism suitable for positioning and/or fixating the wind turbine blade inside the maintenance enclosure 2. The enclosure 1 may comprise blade positioning means 12 on one side or on both sides of the slit 8. The blade positioning means 12 may be fixed or movable in the horizontal direction to adapt them to the curvature and/or width of the blade.

In this embodiment, the first side wall 5a and second side wall 5b are straight walls. However, in another embodiment, the sidewalls could be bent, curved, wave-shaped or any other shape which may be structurally or aerodynamically optimized for preventing buckling of the maintenance enclosure or for withstanding wind loads.

In this embodiment, the sealing element 16 comprises an air cushion 17. However, in another embodiment, the sealing element 16 could comprise a gate of brushes as known from door seals, a rubber seal, a wedge-shaped polymer seal, a pad or any other kind of seal which is adaptable to a part of the circumference of the wind turbine blade and which provides for a sealing effect. The air cushion 17 may provide for a sealing element 16 for providing a firm seal between the wind turbine blade 2 and the first wall 5a of maintenance enclosure 1 such that the maintenance enclosure 1 and the wind turbine blade 2 are firmly secured in relation to each other. The sealing element 16 may also provide for sealing against e.g. wind, rain, snow and dust which may leak into the maintenance enclosure 1 and affect the working environment or function of the maintenance enclosure 1.

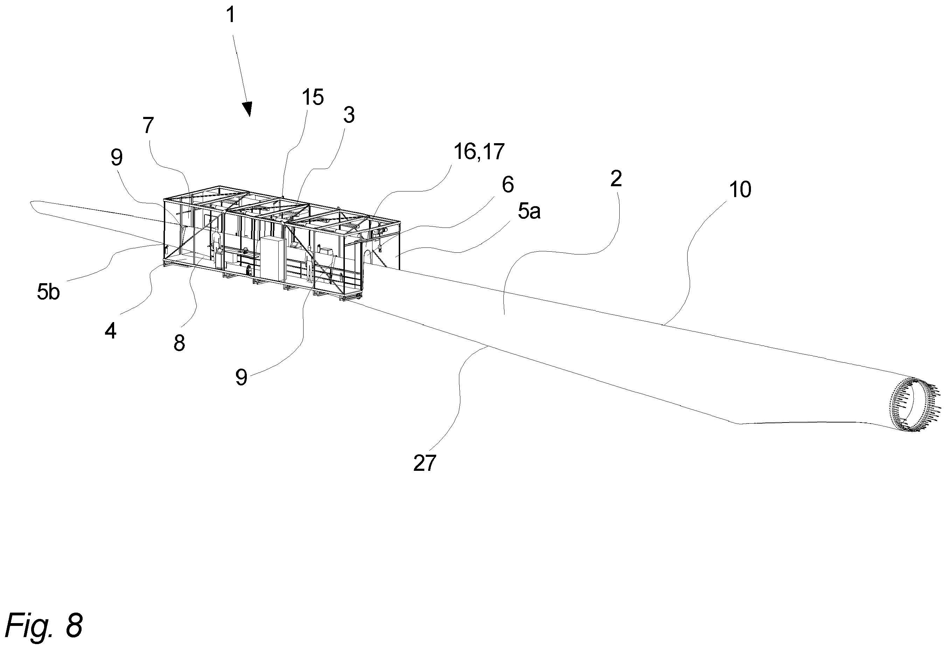

Fig. 8-10 illustrates a different configuration of a maintenance enclosure 1 enclosing a wind turbine blade 2 as seen in perspective, from the side and from the top, respectively.

The leading edge 10 of the blade 2 is exposed to heavy wear. Therefore, the main part of the maintenance work is performed on this region of the wind turbine blade 2 and the figures therefore illustrate maintenance enclosure 1 which encloses a wind turbine blade 2 with the leading 10 facing upwards. However, the maintenance enclosure 1 may also be lifted onto the blade with the trailing edge 27 facing upwards. Thus, the maintenance enclosure is also suitable for performing maintenance on the wind turbine blade 2 with the trailing edge 27 pointing upwards.

In this embodiment, the slit 8 extends in the entire longitudinal direction of the maintenance enclosure 1. However, in another embodiment, the slit 8 could extend in an angled direction or transverse direction. Also, in an embodiment, the slit 8 extends only a part of the length of the floor 4 e.g. if the maintenance enclosure 1 was initially placed vertically down onto the tip of the blade 2 and subsequently moved horizontally along the blade 2.

Fig. 11-12 illustrates an embodiment of the maintenance enclosure 1 formed as a container and positioned at the tip of the blade as seen in perspective.

The maintenance platform may be used for offshore wind turbines as well as onshore wind turbines and depending on the site, wind currents may shift and rotate the maintenance platform 1 in the air as it is lifted onto the wind turbine blade 2. Therefore, in an embodiment (as disclosed in fig. 12), the maintenance enclosure may comprise propellers 19 for adjusting the position and counter-act the wind shear. And in another embodiment the positioning means 18 could comprise nozzles, a wire system, flap or other kind of means for adjusting the orientation and/or position of the maintenance enclosure 2.

Due to the design of the maintenance enclosure 1 it may operate at any given time of the day or year. However, it may often be used in daylight rather than in times of dark. Therefore, the maintenance enclosure may be provided with window panes 23 for increasing the natural light inside the maintenance enclosure and also for reducing the energy which is spent on artificial lightning. To further increase the efficiency of the maintenance enclosure 1, it may be advantageous to provide solar cells 22 on the ceiling 3 such that the maintenance enclosure 1 may be self-sustained (or at least more).

In this embodiment, the maintenance enclosure 1 is elongated and rectangular with 90-degree angles. However, in another embodiment, the maintenance enclosure may be triangular, circular, polygonal, parallelepiped with angles other than 90-degree or any other shape.

In this embodiment, the maintenance enclosure 1 may be an ISO-container with standard dimensions comprising corner castings in each corner. If the maintenance enclosure 1 is an ISO-container it may be easier to stack and ship the enclosure(s) to different sites by using standard container ships. In another embodiment the maintenance enclosure 1 may also comprise an ISO-container with lifting lugs 15 as shown in fig. 12 instead of/in combination with standard corner castings.

Also, in the embodiment of fig. 12, the maintenance enclosure is lifted via the lifting lugs 15. However, in another embodiment, the maintenance platform 1 may comprise channels for receiving forks, a hook, corner casting or other kind of part which may be used for lifting the maintenance enclosure 1.

Although it is safest to suspend the maintenance enclosure 1 on a lifting crane at all times, the maintenance enclosure 1 may, in an embodiment, be supported entirely by the wind turbine blade 2.

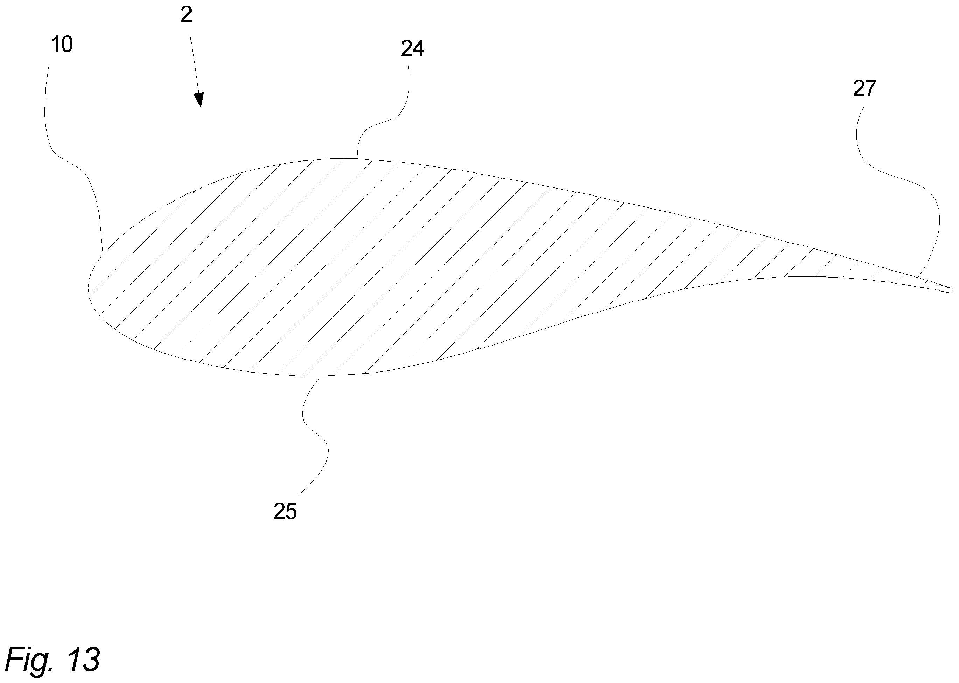

Fig. 13 illustrates a cross-sectional view of the wind turbine blade 2.

The airfoil 2 is shaped such that it generates a pressure difference between the high-pressure side 25 and the low-pressure side 24 when the air flows from the leading edge 10 to the trailing edge 27 whereby an aerodynamic force is produced which generates lift.

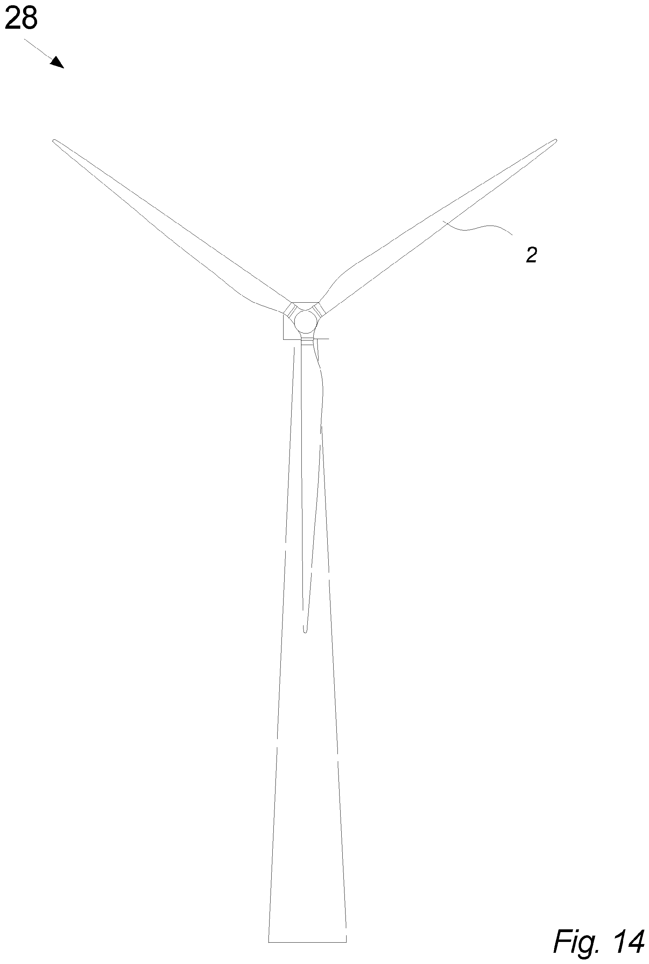

Fig. 14 illustrates a wind turbine 28.

The wind turbine 28 could be an offshore wind turbine or an onshore wind turbine on which wind turbine blades 2 may be serviced by using the maintenance enclosure 1 according to an embodiment of the invention.

The invention has been exemplified above with reference to specific examples of blade edge support 9, blade positioning means 12, sealing element 16 and other. However, it should be understood that the invention is not limited to the particular examples described above but may be designed and altered in a multitude of varieties within the scope of the invention as specified in the claims.

### List

1. Maintenance enclosure
2. Wind turbine blade
3. Ceiling
4. Floor
5a. First side wall
5b. Second side wall
6. First adjustable opening
7. Second adjustable opening
8. Slit
9. Blade edge support
10. Leading edge
11. Sliding door
12. Blade positioning means
13. Suction cups
14. Expanding walls
15. Lifting lugs
16. Sealing element
17. Air cushions
18. Positioning means
19. Propellers
20. Guide means
21. Lifting means
22. Solar cell
23. Window pane
24. Low-pressure side
25. High-pressure side
26. Ventilation system
27. Trailing edge
28. Wind turbine

## Claims

1. A maintenance enclosure (1) for use when maintaining a wind turbine blade (2), said maintenance enclosure (1) comprising:
a ceiling (3), a floor (4) and at least two side walls (5a, 5b) extending between said ceiling (3) and said floor (4),
a first adjustable opening (6) in a first side wall (5a) of said at least two side walls (5a, 5b) adapted for receiving said wind turbine blade (2) and a second adjustable opening (7) in a second side wall (5b) of said at least two side walls (5a, 5b) adapted for receiving said wind turbine blade (2), wherein said first adjustable opening (6) and said second adjustable opening (7) are positioned opposite each other,
wherein said floor (4) comprises a slit (8) extending at least a portion of the distance between said first adjustable opening (6) and said second adjustable opening (7), and wherein said slit (8) is adapted for receiving said wind turbine blade (2).

2. A maintenance enclosure (1) according to claim 1, wherein said maintenance enclosure (1) further comprises a blade edge support (9) adapted for supporting said maintenance enclosure (1) on an edge of said wind turbine blade (2).

3. A maintenance enclosure according to claim 1 or 2, wherein said maintenance enclosure (1) is formed elongated and wherein said first side wall (5a) and said second side wall (5b) are positioned in opposite ends of said elongated maintenance enclosure (1).

4. A maintenance enclosure (1) according to claim 3, wherein said slit (8) extends along the longitudinal direction of said maintenance enclosure (1).

5. A maintenance enclosure (1) according to any of the preceding claims, wherein said slit (8) extends the entire length of said floor (4).

6. A maintenance enclosure (1) according to any of the preceding claims, wherein said first adjustable opening (6) and/or said second adjustable opening (7) comprises a sliding door (11).

7. A maintenance enclosure (1) according to any of the preceding claims, wherein said maintenance enclosure comprises blade positioning means (12) adapted for maintaining the mutual position between said maintenance enclosure (1) and said wind turbine blade (2) in the horizontal direction.

8. A maintenance enclosure (1) according to any of the preceding claims, wherein said first adjustable opening (6) and/or second adjustable opening (7) comprises a sealing element (16) adaptable to the shape of at least a part of the circumference of said wind turbine blade (2).

9. A maintenance enclosure (1) according to any of the preceding claims, wherein said maintenance enclosure (1) comprises positioning means (18) for bringing said maintenance enclosure (1) into alignment with said wind turbine blade (2).

10. A maintenance enclosure (1) according to any of the preceding claims, wherein said maintenance enclosure (1) comprises guide means (20) at said floor (4) arranged to guide said wind turbine blade (2) into said slit (8).

11. A method for maintaining a wind turbine blade (2), said method comprising the steps of:
• positioning a wind turbine blade (2) of a wind turbine (28) in a substantially horizontal position,
• lifting a maintenance enclosure (1) according to claim 1 onto said wind turbine blade (2) so
that said wind turbine blade (2) penetrates the floor (4) and at least one side wall of said maintenance enclosure (1),
• performing maintenance on said wind turbine blade (3) from inside of said maintenance enclosure (1).

12. A method according to claim 11, wherein said method comprises the step of fixating the position of said maintenance enclosure (1) in relation to said wind turbine blade (2) before performing said maintenance.

13. A method according to claim 11 or 12, wherein said wind turbine blade (2) is positioned with a leading edge (10) of said wind turbine blade (2) facing upwards.

14. A method according to any of claims 11-13, wherein said method further comprises the step of guiding said maintenance enclosure (1) onto said wind turbine blade (2) by means of positioning means (18) capable of adjusting the position and/or orientation of said maintenance enclosure (1) in the horizontal plane.

15. A method according to any of claims 11-14, wherein said method further comprises the step of sealing a gap between said wind turbine blade (2) and said floor (4) and/or between said wind turbine blade (2) and said at least one sidewall after lifting a maintenance enclosure (1) onto said wind turbine blade (2).

## Patentansprüche

1. Wartungsgehäuse (1) zur Verwendung beim Warten eines Windkraftanlagenblatts (2), wobei das Wartungsgehäuse (1) umfasst:
eine Decke (3), einen Boden (4) und mindestens zwei Seitenwände (5a, 5b), die sich zwischen der Decke (3) und dem Boden (4) erstrecken,
eine erste einstellbare Öffnung (6) in einer ersten Seitenwand (5a) der mindestens zwei Seitenwände (5a, 5b), die zum Aufnehmen des Windkraftanlagenblatts (2) ausgelegt ist, und eine zweite einstellbare Öffnung (7) in einer zweiten Seitenwand (5b) der mindestens zwei Seitenwände (5a, 5b), die zum Aufnehmen des Windkraftanlagenblatts (2) ausgelegt ist, wobei die erste einstellbare Öffnung (6) und die zweite einstellbare Öffnung (7) einander gegenüberliegend positioniert sind,
wobei der Boden (4) einen Schlitz (8) umfasst, der sich mindestens über einen Teil des Abstands zwischen der ersten einstellbaren Öffnung (6) und der zweiten einstellbaren Öffnung (7) erstreckt, und wobei der Schlitz (8) zum Aufnehmen des Windkraftanlagenblatts (2) ausgelegt ist.

2. Wartungsgehäuse (1) nach Anspruch 1, wobei das Wartungsgehäuse (1) ferner eine Blattkantenstütze (9) umfasst, die zum Stützen des Wartungsgehäuses (1) an einer Kante des Windkraftanlagenblatts (2) ausgelegt ist.

3. Wartungsgehäuse nach Anspruch 1 oder 2, wobei das Wartungsgehäuse (1) länglich ausgebildet ist und wobei die erste Seitenwand (5a) und die zweite Seitenwand (5b) an gegenüberliegenden Enden des länglichen Wartungsgehäuses (1) positioniert sind.

4. Wartungsgehäuse (1) nach Anspruch 3, wobei sich der Schlitz (8) entlang der Längsrichtung des Wartungsgehäuses (1) erstreckt.

5. Wartungsgehäuse (1) nach einem der vorhergehenden Ansprüche, wobei sich der Schlitz (8) über die gesamte Länge des Bodens (4) erstreckt.

6. Wartungsgehäuse (1) nach einem der vorhergehenden Ansprüche, wobei die erste einstellbare Öffnung (6) und/oder die zweite einstellbare Öffnung (7) eine Schiebetür (11) umfasst.

7. Wartungsgehäuse (1) nach einem der vorhergehenden Ansprüche, wobei das Wartungsgehäuse Blattpositionierungsmittel (12) umfasst, die ausgelegt sind, um die gegenseitige Position zwischen dem Wartungsgehäuse (1) und dem Windkraftanlagenblatt (2) in der horizontalen Richtung aufrechtzuerhalten.

8. Wartungsgehäuse (1) nach einem der vorhergehenden Ansprüche, wobei die erste einstellbare Öffnung (6) und/oder die zweite einstellbare Öffnung (7) ein Dichtungselement (16) umfasst, das an die Form von mindestens einem Teil des Umfangs des Windkraftanlagenblatts (2) anpassbar ist.

9. Wartungsgehäuse (1) nach einem der vorhergehenden Ansprüche, wobei das Wartungsgehäuse (1) Positionierungsmittel (18) umfasst, um das Wartungsgehäuse (1) in Ausrichtung mit dem Windkraftanlagenblatt (2) zu bringen.

10. Wartungsgehäuse (1) nach einem der vorhergehenden Ansprüche, wobei das Wartungsgehäuse (1) Führungsmittel (20) an dem Boden (4) umfasst, die ausgelegt sind, um das Windkraftanlagenblatt (2) in den Schlitz (8) zu führen.

11. Verfahren zum Warten eines Windkraftanlagenblatts (2), wobei das Verfahren die folgenden Schritte umfasst:
• Positionieren eines Windkraftanlagenblatts (2) einer Windkraftanlage (28) in einer im Wesentlichen horizontalen Position,
• Anheben eines Wartungsgehäuses (1) nach Anspruch 1 auf das Windkraftanlagenblatt (2), sodass das Windkraftanlagenblatt (2) den Boden (4) und mindestens eine Seitenwand des Wartungsgehäuses (1) durchdringt,
• Durchführen von Wartung an dem Windkraftanlagenblatt (3) vom Inneren des Wartungsgehäuses (1) aus.

12. Verfahren nach Anspruch 11, wobei das Verfahren den Schritt eines Fixierens der Position des Wartungsgehäuses (1) in Bezug auf das Windkraftanlagenblatt (2) vor dem Durchführen der Wartung umfasst.

13. Verfahren nach Anspruch 11 oder 12, wobei das Windkraftanlagenblatt (2) so positioniert wird, dass eine Vorderkante (10) des Windkraftanlagenblatts (2) nach oben zeigt.

14. Verfahren nach einem der Ansprüche 11-13, wobei das Verfahren ferner den Schritt eines Führens des Wartungsgehäuses (1) auf das Windkraftanlagenblatt (2) mittels Positionierungsmitteln (18) umfasst, die in der Lage sind, die Position und/oder Ausrichtung des Wartungsgehäuses (1) in der horizontalen Ebene einzustellen.

15. Verfahren nach einem der Ansprüche 11-14, wobei das Verfahren ferner den Schritt eines Abdichtens einer Lücke zwischen dem Windkraftanlagenblatt (2) und dem Boden (4) und/oder zwischen dem Windkraftanlagenblatt (2) und der mindestens eine Seitenwand nach dem Anheben eines Wartungsgehäuses (1) auf das Windkraftanlagenblatt (2) umfasst.

## Revendications

1. Enceinte de maintenance (1) destinée à être utilisée lors d'une maintenance de pale d'éolienne (2), ladite enceinte de maintenance (1) comprenant :
un plafond (3), un plancher (4) et au moins deux parois latérales (5a, 5b) s'étendant entre ledit plafond (3) et ledit plancher (4),
une première ouverture réglable (6) dans une première paroi latérale (5a) desdites au moins deux parois latérales (5a, 5b) adaptée pour recevoir ladite pale d'éolienne (2) et une deuxième ouverture réglable (7) dans une deuxième paroi latérale (5b) desdites au moins deux parois latérales (5a, 5b) adaptées pour recevoir ladite pale d'éolienne (2), dans lequel ladite première ouverture réglable (6) et ladite deuxième ouverture réglable (7) sont positionnées face à face,
dans laquelle ledit plancher (4) comprend une fente (8) s'étendant sur au moins une partie de la distance entre ladite première ouverture réglable (6) et ladite deuxième ouverture réglable (7), et dans lequel ladite fente (8) est adaptée pour recevoir ladite pale d'éolienne (2).

2. Enceinte de maintenance (1) selon la revendication 1, dans laquelle ladite enceinte de maintenance (1) comprend en outre un support de bord de pale (9) adapté pour supporter ladite enceinte de maintenance (1) sur un bord de ladite pale d'éolienne (2).

3. Enceinte de maintenance selon la revendication 1 ou 2, dans laquelle ladite enceinte de maintenance (1) est formée allongée et dans laquelle ladite première paroi latérale (5a) et ladite deuxième paroi latérale (5b) sont positionnées dans des extrémités opposées de ladite enceinte de maintenance allongée (1).

4. Enceinte de maintenance (1) selon la revendication 3, dans laquelle ladite fente (8) s'étend le long de la direction longitudinale de ladite enceinte de maintenance (1).

5. Enceinte de maintenance (1) selon l'une quelconque des revendications précédentes, dans laquelle ladite fente (8) s'étend sur toute la longueur dudit plancher (4).

6. Enceinte de maintenance (1) selon l'une quelconque des revendications précédentes, dans laquelle ladite première ouverture réglable (6) et/ou ladite deuxième ouverture réglable (7) comprend une porte coulissante (11).

7. Enceinte de maintenance (1) selon l'une quelconque des revendications précédentes, dans laquelle ladite enceinte de maintenance comprend des moyens de positionnement de pale (12) adaptés pour maintenir la position mutuelle entre ladite enceinte de maintenance (1) et ladite pale d'éolienne (2) dans la direction horizontale.

8. Enceinte de maintenance (1) selon l'une quelconque des revendications précédentes, dans laquelle ladite première ouverture réglable (6) et/ou ladite deuxième ouverture réglable (7) comprend un élément d'étanchéité (16) adaptable à la forme d'au moins une partie de la circonférence de ladite pale d'éolienne (2).

9. Enceinte de maintenance (1) selon l'une quelconque des revendications précédentes, dans laquelle ladite enceinte de maintenance (1) comprend des moyens de positionnement (18) pour amener ladite enceinte de maintenance (1) en alignement avec ladite pale d'éolienne (2).

10. Enceinte de maintenance (1) selon l'une quelconque des revendications précédentes, dans laquelle ladite enceinte de maintenance (1) comprend des moyens de guidage (20) au niveau dudit plancher (4) agencés pour guider ladite pale d'éolienne (2) dans ladite fente (8).

11. Procédé de maintenance d'une pale d'éolienne (2), ledit procédé comprenant les étapes de :
• positionnement d'une pale d'éolienne (2) d'une éolienne (28) dans une position sensiblement horizontale,
• levée d'une enceinte de maintenance (1) selon la revendication 1 sur ladite pale d'éolienne (2) de sorte
que ladite pale d'éolienne (2) pénètre dans le plancher (4) et au moins une paroi latérale de ladite enceinte de maintenance (1),
• réalisation d'une maintenance sur ladite pale d'éolienne (3) depuis l'intérieur de ladite enceinte de maintenance (1).

12. Procédé selon la revendication 11, dans lequel ledit procédé comprend l'étape de fixation de la position de ladite enceinte de maintenance (1) par rapport à ladite pale d'éolienne (2) avant de réaliser ladite maintenance.

13. Procédé selon la revendication 11 ou 12, dans lequel ladite pale d'éolienne (2) est positionnée avec un bord d'attaque (10) de ladite pale d'éolienne (2) tourné vers le haut.

14. Procédé selon l'une quelconque des revendications 11 à 13, dans lequel ledit procédé comprend en outre l'étape de guidage de ladite enceinte de maintenance (1) sur ladite pale d'éolienne (2) au moyen de moyens de positionnement (18) aptes à régler la position et/ou l'orientation de ladite enceinte de maintenance (1) sur le plan horizontal.

15. Procédé selon l'une quelconque des revendications 11 à 14, dans lequel ledit procédé comprend en outre l'étape d'étanchéification d'un espace entre ladite pale d'éolienne (2) et ledit plancher (4) et/ou entre ladite pale d'éolienne (2) et ledit au moins une paroi latérale après levage d'une enceinte de maintenance (1) sur ladite pale d'éolienne (2).
